# EUROPÄISCHE PATENTSCHRIFT

(11) **EP 1 342 510 B1**
(45) Veröffentlichungstag und Bekanntmachung des Hinweises auf die Patenterteilung: **23.04.2008**
(21) Anmeldenummer: 03003973.9
(22) Anmeldetag: 22.02.2003
(51) Int. Cl.: B08B 7/00, F01D 5/28, B23K 26/36, B23K 10/00, B23K 26/03, F01D 25/00

(54) **Verfahren zur Entschichtung von Triebwerksbauteilen und Vorrichtung zur Durchführung des Verfahrens**
Process for stripping of engine elements and device for process execution
Procédé de décapage d'éléments de moteur et dispositif d'exécution du procédé

(30) Priorität: 09.03.2002 DE 10210518
(43) Veröffentlichungstag der Anmeldung: 10.09.2003
(73) Patentinhaber: MTU Aero Engines GmbH, 80995 München (DE)
(72) Erfinder: Bayer, Erwin, Dr., 85221 Dachau (DE); Gold, Karsten, 21684 Stade (DE); Platz, Albin, 86510 Ried-Baindlkirch (DE); Schmidt, Matthias, Dr., 06796 Brehna (DE)

(56) Entgegenhaltungen:
- WO-A-00/72221
- DE-A1- 4 320 408
- DE-A1- 4 439 714
- GB-A- 2 117 269
- GB-A- 2 169 496
- US-A- 4 737 628
- US-A- 5 216 808

## Beschreibung

Die Erfindung betrifft ein Verfahren zum selektiven und prozessgesteuerten Abfragen einer oder mehrerer Schichten von einem zu erhaltenden Untergrund eines Triebwerkbauteils gemäß dem Oberbegriff des Anspruchs 1 und eine Vorrichtung zum Durchführen der VVerwendung des Verfahrens nach den Ansprüchen 1 bis 4 gemäß dem Oberbegriff des Anspruchs 5 (siehe, z.B., US-A-5 216 808).

Aus der US-A-5,216,808 ist ein Herstellungsverfahren für ein mit KüNtöchern versehenes Gasturbinenbauteil bekannt, bei dem das Gasturbinenbauteil beschichtet wird, wobei anschließend mittels eines Excimer Lasers unerwünschtes Schichtmaterial im Bereich der Kühllöcher entfernt wird, um eine ausreichende Querschnittsfläche der Kühllöcher sicherzustellen. Die Steuerung erfolgt dabei mittels der CNC-Daten, mittels denen die Kühllöcher gefertigt wurden.

Die DE 44 39 714 A1 offenbart ein Verfahren zum Markieren von Produkten, bei dem ein Spektrometer eingesetzt wird.

Aus der WO/00/72221 A ist ein Verfahren bekannt, mit dem elektronische Miniaturbauteile zur Vermeidung eines hohen Reinigungsaufwandes nur in ausgewählten Bereichen entsprechend einem Muster gereinigt werden können.

In Verbundbauweise hergestellte Triebwerksbauteile insbesondere von Hochteistungstriebwerken wie beispielsweise Turbinenschaufeln sind nach jeweils vorgegebenen Betriebszeiten bis auf das Grundmaterial zu entschichten, um dieses für den weiteren Einsatz anschließend neu beschichten zu können.

Dieses Entschichten erfolgt bisher mittels nass-chemischer Prozesse. Das Grundmaterial solcher Turbinenschaufeln sind vorzugsweise Nickel-, Kobalt- und Titanbasislegierungen, während die aufzubringenden Beschichtungen aus korrosionsbeständigen Nickel-Aluminium-, Nickel-Chrom-Aluminium-, MCrAlY-Legierungen (M=Nickel, Kobalt, Nickel-Kobalt-Legierung oder Eisen) oder aus einer Platin-Aluminium-Legierung bestehen. Beim nass-chemischen Abtragen dieser Beschichtungen besteht die Gefahr, dass beim Erreichen des Grundmaterials dieses ebenfalls partiell abgetragen oder chemisch angegriffen wird, weil Grundwerkstoff und Beschichtung in der chemischen Zusammensetzung sehr ähnlich sind. Ein Angriff des Grundmaterials lässt sich beim nasschemischen Entschichten auch durch Prozessanalytik nicht vermeiden, da der Umfang unerwünschter Abtragungen mittels messtechnischer Maßnahmen erst nach Beendigung des Entschichtungsprozesses feststellbar ist, so dass bei diesen Verfahren eine Beschränkung der Entschichtungshäufigkeit notwendig ist. Darüber hinaus sind solche nass-chemischen Verfahren ökologisch bedenklich, sie erfordern einen hohen Aufwand für die notwendigen Arbeitsschutzmaßnahmen und die umweltgerechte Entsorgung der Prozessmittel.

Hier setzt nun die Erfindung ein, deren Aufgabe es ist unter Vermeidung der nasschemischen Verfahren das Entschichten solcher Triebwerksbauteile besser und genauer, als bisher möglich, durchzuführen.

Diese Aufgabe ist erfindungsgemäß durch ein Verfahren gemäß Anspruchs 1 und durch die Vorrichtung gemäß Anspruch 5 gelöst, wobei das an sich bekannte selektive Abtragen von Schichten von einem zu erhaltenden Untergrund durch das Laserstrahl-Verfahren gemäß der DE 197 15 702 in einer weiterentwickelten Form oder durch ein Hochenergie-Plasma-Pulsverfahren erfolgt, so dass es als Mittel für das prozessgesteuerte Entschichten von Triebwerksbauteilen einsetzbar ist.

Sowohl beim Laserstrahl-Verfahren als auch beim Hochenergie-Plasma-PulsVerfahren erfolgt erfindungsgemäß eine ständige Prozesskontrolle der Materialabtragung während des Entschichtens mittels eines Spektrometers. Das Spektrometer kann als Koppelungselement zur Beobachtung der Strahlung von der abzutragenden Schicht eine Faserleitung zugeordnet haben.

Weitere Merkmale der Erfindung ergeben sich aus den Unteransprüchen.

Das neue Verfahren zum Abtragen von Schichten - bevorzugt Metallschichten - von Triebwerksbauteilen hat eine Reihe von Vorteilen. So entfallen alle Nachteile der ökologisch und ökonomisch bedenklichen nass-chemischen Verfahren. Es ist erstmals eine Optimierung und genaue Bestimmung des Materialabtrages durch die ständige Prozesskontrolle über das Spektrometer möglich und auf wirtschaftliche Weise realisierbar, was zu besserer Qualitätssicherung und Verkürzung von Fertigungstaktzeiten führt. Das Spektrometer analysiert das Leuchten bedingt durch die eingestrahlte Laser- oder Plasmastrahlung. Die Strahlung ist charakteristisch für das abgetragene Material. Da bei Verwendung des Hochenergie-Plasma-Pulsverfahrens im Gegensatz zum Laser jeweils eine Fläche von bis zu einigen Quadratzentimetern gleichzeitig beaufschlagt und entschichtet wird, erfolgt der Entschichtungsprozess äußerst effizient.

Um eine Komplettentschichtung eines Bauteils mit 3D-Geometrie punktgenau vorzunehmen, wird das Bauteil auf einer mehrachsigen Bewegungseinheit, vorzugsweise einem Roboter, aufgenommen und bewegt.

Gemäß der Erfindung, durch gleichzeitigen Abtrag und die Analyse des abgetragenen Werkstoffes wird ein Abbild der zu entschichtenden Bauteiloberfläche als Konzentrationsprofil eines oder mehrerer in Schicht oder Grundwerkstoff enthaltenen Elemente erzeugt, über das der weitere Entschichtungsprozess gesteuert wird. Bei Erreichen einer bestimmten voreingestellten Konzentrationsschwelle wird der Entschichtungsprozess abgeschlossen.

Ein Materialabtrag vom Grundmaterial des zu entschichtenden Bauteils wird dadurch mit großer Zuverlässigkeit vermieden. Ferner sind Arbeitsschutzmaßnahmen wesentlich einfacher als bei nasschemischen Abtragungsverfahren durchzuführen.

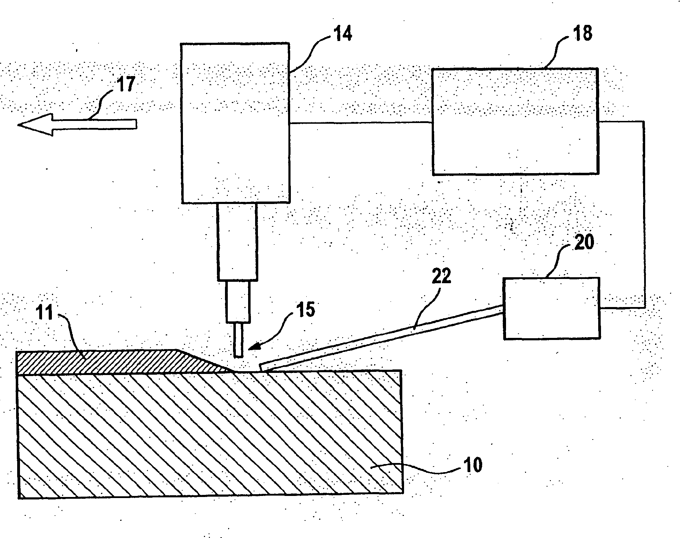

Die Erfindung ist nachfolgend anhand eines in der Zeichnung mehr oder minder schematisch dargestellten Ausführungsbeispiels beschrieben.

Ein in geeigneter Weise aufgespanntes Triebwerksbauteil 10 aus Nickel-Basis-Legierung, z. B. eine Turbinenschaufel, trägt eine ein- oder mehrschichtige Beschichtung 11 aus einer heißgaskorrossionsbeständigen Schicht des Typs MCrAIY und eine keramischen ZrO₂-Wärmedämmschicht. Einer Energiequelle 14 ist ein das Austrittsfenster der energiereichen Strahlung aufweisender Strahlkopf (Laser- oder Plasmaquelle) 15 zugeordnet, der in Richtung des Pfeils 17 - die Vorschubrichtung - bewegbar ist.

Ferner ist eine einen Rechner aufweisende Steuereinheit 18 zur Regulierung der Energieabgabe der Energiequelle 14 zugeordnet, die mit einem Spektrometer 20 verbunden ist. Als Koppelungselement zwischen abzutragender Schicht 11 und Spektrometer 20 dient in der Regel eine Faserleitung 22.

Der Aufbau und die Ausbildung der vorstehend genannten Baugruppen und -teile ist an sich bekannt und daher im einzelnen hier nicht näher dargestellt und beschrieben.

Die Energiequelle ist je nach Anwendung beispielsweise als Laserenergiequelle oder als Hochenergie-Plasma-Puls-Quelle ausgebildet.

Wie bereits erwähnt, weisen die abzutragenden Schichten in ihrer chemischen Zusammensetzung Unterschiede zum Material der Turbinenschaufeln auf, die in der Regel aus Nickel-Basis-Legierungen bestehen und mit metallischen, korrosionsbeständigen Zwischenschichten (z.B. PtAI-Diffusionsschicht, MCrAIY-Auflageschutzschicht) sowie weiteren Funktionsschichten, wie z.B. einer ZrO₂-Wärmedämmschicht beschichtet sind. Wird nun die Entschichtung begonnen, so wird das Schichtmaterial durch Verdampfen der jeweils oberflächennahen Zonen abgetragen. Über die Faserkuppelung erfolgt eine Weitergabe eines Signals in Form eines emittierten Lichtstrahls aus der Laser- oder Plasmabearbeitung, der proportional der Konzentration eines oder mehrerer Elemente im Material der abzutragenden Schicht ist, an das Spektrometer. Die Auswertung der Signale, also die jeweilige Feststellung der Konzentration der abgetragenen Elemente und die Zuordnung des Materials erfolgt in dem dem Spektronmeter nachgeschalteten Rechner.

Während des Abtragens der Schichten erfolgt eine wegen der Konzentrationsänderung der Schicht erkennbare Änderung der gewonnenen Spektren. In den dem Rechner der Steuereinheit zugeordneten Speicherplätzen sind die materialspezifischen Konzentrationsprofile des Materials, aus dem das zu beschichtende Bauteil 10 besteht, sowie die Profile der abzutragenden Schicht oder Schichten der Beschichtung 11 gespeichert. Durch Vergleich der gespeicherten und der beim Abtragen der Schichten ermittelten Spektren wird bei hinreichender Spektrengleichheit das jeweilige Umschalt- bzw. Abbruchkriterium ermittelt, sodass entweder die Energiezufuhr den materialspezifischen Eigenschaften der jeweils abzutragenden Schicht anpassbar oder aber der jeweilige Materialabtrag unterbrechbar ist.

Ist also beim Entschichten des Bauteils 10 das voreingestellte Spektrum des Materials detektiert, bei dem der Prozess gestoppt werden soll, so kann dies entweder eine vollständige Bauteilentschichtung sein, oder aber der Entschichtung bis zu einem gewünschten Abtrag innerhalb der Diffusionszone, z.B. bei Diffusionsschutzschichten entsprechen, wodurch Schädigungen am Grundmaterial infolge eines zu starken Materialabtrags mit Sicherheit vermieden werden. Um die jeweils geforderte Unterbrechung des Materialabtrages zu gewährleisten, werden also die Daten des Spektrometers in den Rechner der Steuereinheit online übertragen.

Der Abbruch der Energiezufuhr auf das Bauteil 10 erfolgt durch eine Unterbrechung der Energiezufuhr zur Strahlenquelle.

Die zugeführte Strahlung muss so eine hohe Intensität haben, dass das zu entfernende Material vorwiegend verdampft. Um das darunter liegende Material durch das Einbringen von Wärmeenergie nicht zu schädigen, muss der Einzelimpuls sehr kurz sein.

## Patentansprüche

1. Verfahren zum selektiven und prozessgesteuerten Abtragen einer oder mehrerer Schichten (11) von einem zu erhaltenden Untergrund eines Triebwerkbauteiles (10) mittels energiereicher Strahlung mit selbstregulierender Prozessbegrenzung, wobei Strahlung solcher Wellenlänge zur Anwendung gelangt, dass sie von der jeweils abzutragenden Schicht (11) so stark absorbiert wird, dass die Abtragsschwelle des jeweiligen Materials der abzutragenden Schicht überschritten wird, während diese Abtragsschwelle in dem zu erhaltenden Untergrund nicht erreicht wird **dadurch** kenngezeichnet, daß die verfahrenspezifischen Kennwerte während des Abtragens der jeweiligen Schicht (11) mittels spektroskopischer Methoden bestimmt werden, wobei die wenigstens eine abzutragende Schicht (11) in ihrer chemischen Zusammensetzung Unterschiede zum Material des Triebwerkbauteiles (10) aufweist und wobei durch Vergleich von gespeicherten und beim Abtragen der Schichten (11) ermittelten Spektren bei hinreichender Spektrengleichheit das jeweilige Umschalt- bzw. Abbruchkriterium ermittelt bzw. festgesezt bzw. gewählt wird.

2. Verfahren nach Anspruch 1, **gekennzeichnet durch** die Verwendung von Laserstrahlen für das Abtragen der einzelnen Schichten (11) vom Grundmaterial des Triebwerkbauteiles (10).

3. Verfahren nach Anspruch 1, **gekennzeichnet durch** die Verwendung eines Hochenergie-Plasma-Puls-Verfahrens für das Abtragen der einzelnen Schichten vom Grundmaterial des Triebwerkbauteiles (10).

4. Verfahren nach den Ansprüchen 1 bis 3, **dadurch gekennzeichnet, dass** das Unterbrechen der Entschichtung durch Unterbrechen der Energiezuführung und/oder durch Positionsänderung der Austrittsöffnung der Strahlung der Energiequelle oder des zu entschichtenden Triebwerkbauteiles (10) erfolgt.

5. Vorrichtung zur Durchführung des Verfahrens nach den Ansprüchen 1 bis 4, wobei eine Energiequelle (14) zwecks Erzeugung der für das Entschichten benötigten Laser - oder Plasma -Energie, eine Steuereinheit (18) zur Regulierung der Energieerzeugung und -zufuhr in die abzutragende Schicht (11) des Bauteils (10) und **gekennzeichnet durch** ein mit der Steuereinheit (18) verbundenes Spektrometer (20) zur Ermittlung der aktuellen schichtmaterialtypischen Spektren der Schichten (11) des zu entschichtenden Bauteils, dessen Daten für den Abtragsprozess in der Steuereinheit (18) verarbeitbar sind, und wobei die Steuereinheit (18) einen Rechner und diesem zugeordnete Speicherplätze umfasst, in denen das materialspezifische Spektrum des Materials, aus dem das zu entschichtende Bauteil (10) besteht sowie die metallspezifischen Spektren der abzutragenden Schicht oder Schichten der Beschichtung (11) gespeichert sind, und dass **durch** Vergleich der gespeicherten und der beim Abtragen der Schichten (11) ermittelten Spektren bei hinreichender Spektrengleichheit das jeweilige Umschalt- oder Abbruchkriterium ermittelbar und der schichtweise Materialabtrag unterbrechbar sind.

6. Vorrichtung nach Anspruch 5, **dadurch gekennzeichnet, dass** als Koppelungselement zwischen abzutragender Schicht (11) und Spektrometer (20) in der Regel eine Faserleitung (22) dient.

## Claims

1. Method for the selective and process-controlled stripping of one or more layers (11) from a substrate of an engine component (10) which is to be preserved by means of high-energy radiation with self-regulating process limitation, wherein radiation with a wavelength is used which is absorbed by the layer (11) to be stripped to such an extent that the stripping threshold of the material of the layer (11) to be stripped is exceeded while the said stripping threshold is not reached in the substrate to be preserved, **characterised in that** the process-specific characteristics are determined by means of spectroscopic methods while the respective layer (11) is stripped, wherein the at least one layer (11) to be stripped differs in its chemical composition from the material of the engine component (10) and wherein, by means of comparing stored spectra and spectra detected during the stripping of the layers (11), the relevant switch-over or termination criterion is determined, set or selected at sufficient equality of the spectra.

2. Method according to claim 1, **characterised by** the use of laser beams for stripping the individual layers (11) from the substrate material of the engine component (10).

3. Method according to claim 1, **characterised by** the use of a high-energy plasma pulse process for stripping the individual layers (11) from the substrate material of the engine component (10).

4. Method according to any of claims 1 to 3, **characterised in that** the stripping process is interrupted by interrupting the energy supply and/or by changing the position of the radiation window of the energy source or of the engine component (10) to be stripped.

5. Device for the execution of the method according to any of claims 1 to 4, comprising an energy source (14) for the generation of the laser or plasma energy required for stripping and a control unit (18) for the regulation of energy generation and of the energy supply to the layer (11) to be stripped of the engine component (10), **characterised by** a spectrometer (20) connected to the control unit (18) for the determination of the current spectra typical for the material of the layers (11) of the engine component to be stripped, the data of which can be processed in the control unit (18) for the stripping process, wherein the control unit (18) includes a computer and memory locations allocated thereto, in which the material-specific spectrum of the material of which the engine component (10) to be stripped is made and the material-specific spectra of the layers (11) of the coating are stored, and wherein, by means of comparing stored spectra and spectra detected during the stripping of the layers (11), the relevant switch-over or termination criterion can be determined and the layered material stripping process can be interrupted at sufficient equality of the spectra.

6. Device according to claim 5, **characterised in that** a fibre conduit (22) is generally used as a coupling element between the layer (11) to be stripped and the spectrometer (20).

## Revendications

1. Procédé pour le décapage sélectif et commandé par le processus d'une ou de plusieurs couches (11) d'une couche de fond à obtenir d'un élément de moteur (10) à l'aide du rayonnement à grande énergie avec une limitation de processus autorégulatrice, dans lequel on utilise le rayonnement avec une longueur d'onde telle qu'il est absorbé par la couche (11) destinée à être respectivement décapée avec une force telle que le seuil de décapage du matériau respectif de la couche (11) destinée à être décapée est dépassé alors que de seuil de décapage n'est pas atteint dans la couche de fond à obtenir, **caractérisé en ce que** les valeurs caractéristiques spécifiques au procédé pendant le décapage de la couche (11) respective sont déterminées à l'aide de méthodes spectroscopiques, dans lequel au moins la couche (11) destinée à être décapée présente des différences de composition chimique par rapport au matériau de l'élément de moteur (10) et dans lequel chaque critère d'inversion ou de rupture est déterminé ou fixé ou choisi par la comparaison de spectres mémorisés et déterminés lors du décapage des couches (11) en cas d'uniformité suffisante des spectres.

2. Procédé selon la revendication 1, **caractérisé par** l'utilisation de rayons laser pour le décapage des différentes couches (11) de matériau de fond de l'élément de moteur (10).

3. Procédé selon la revendication 1, **caractérisé par** l'utilisation d'un procédé d'impulsions de plasma à haute énergie pour le décapage des différentes couches (11) de matériau de fond de l'élément de moteur (10).

4. Procédé selon les revendications 1 à 3, **caractérisé en ce que** l'interruption du décapage des couches est réalisée par l'interruption de l'amenée d'énergie et/ou par la modification de la position de l'orifice de sortie du rayonnement de la source d'énergie ou de l'élément de moteur (10) à décaper.

5. Dispositif pour la réalisation du procédé selon les revendications 1 à 4, dans lequel une source d'énergie (14) pour la génération de l'énergie laser - ou plasma - nécessaire pour le décapage, une unité de commande (18) pour la régulation de la génération et de l'amenée d'énergie dans la couche à décaper (11) de l'élément (10) et **caractérisé par** un spectromètre (20) relié à l'unité de commande (18) pour la détermination des spectres réels des couches (11) typiques du matériau des couches dont les données peuvent être exploitées dans l'unité de commande (18) pour le processus de décapage, et dans lequel l'unité de commande (18) comporte un ordinateur et des emplacements de mémoire associé à celui-ci dans lesquels le spectre spécifique au matériau dont est constitué l'élément destiné à être décapé (10) ainsi que les spectres spécifiques au métal de la couche ou des couches destinée(s) à être décapée(s) du revêtement (11) sont mémorisés et chaque critère d'inversion ou de rupture peut être déterminé et le décapage par couche peut être interrompu par la comparaison des spectres mémorisés et déterminés lors du décapage des couches (11) en cas d'uniformité suffisante des spectres.

6. Dispositif selon la revendication 5, **caractérisé en ce qu'**une ligne à fibres optiques (22) sert généralement d'élément de couplage entre la couche destinée à être décapée (11) et le spectromètre (20).
